# EUROPÄISCHE PATENTSCHRIFT

(11) **EP 1 841 699 B1**
(45) Veröffentlichungstag und Bekanntmachung des Hinweises auf die Patenterteilung: **04.06.2008**
(21) Anmeldenummer: 06701055.3
(22) Anmeldetag: 19.01.2006
(51) Int. Cl.: C03B 5/00, C03B 5/12, C22B 5/00, C22B 5/10, C22B 7/04

(54) **VERFAHREN ZUM REDUZIEREN VON METALLOXIDHALTIGEN SCHLACKEN BZW. GLAESERN UND/ODER ENTGASEN VON MINERALISCHEN SCHMELZEN SOWIE VORRICHTUNG ZUR DURCHFUEHRUNG DIESES VERFAHRENS**
METHOD FOR REDUCING METAL OXIDE SLAGS OR GLASSES AND/OR FOR DEGASSING MINERAL MELTS AND DEVICE FOR CARRYING OUT SAID METHOD
PROCEDE POUR REDUIRE DES LAITIERS CONTENANT DES OXYDES METALLIQUES, OU POUR VITRIFIER ET/OU DEGAZER DES MATIERES MINERALES EN FUSION, ET DISPOSITIF POUR METTRE EN OEUVRE LE PROCEDE

(30) Priorität: 27.01.2005 AT 4505 U
(43) Veröffentlichungstag der Anmeldung: 10.10.2007
(73) Patentinhaber: Patco Engineering GmbH, 6300 Zug (CH)
(72) Erfinder: EDLINGER, Alfred, A-6780 Bartholomäberg (AT)
(74) Vertreter: Haffner, Thomas M.
(86) Internationale Anmeldenummer: PCT/AT2006/000028
(87) Internationale Veröffentlichungsnummer: WO 2006/079132

(56) Entgegenhaltungen:
- EP-A- 0 820 962
- EP-A- 1 493 830
- WO-A-97/20958
- PATENT ABSTRACTS OF JAPAN Bd. 017, Nr. 398 (E-1403), 26. Juli 1993 (1993-07-26) & JP 05 074558 A (KITASHIBA DENKI KK; others: 01), 26. März 1993 (1993-03-26)

## Beschreibung

Die Erfindung bezieht sich auf ein Verfahren zum Reduzieren von metalloxidhaltigen Schlacken bzw. Gläsern und/oder Entgasen von mineralischen Schmelzen sowie auf eine Vorrichtung zur Durchführung dieses Verfahrens mit einer Aufgabeöffnung für festes oder schmelzflüssiges Material und einer Abstichöffnung für die behandelte Schmelze.

Stäube und Schlacken, insbesondere Müllschlacken, Stahlschlacken sowie Schlacken aus der Nichteisenmetallurgie und anorganischen Technologie, enthalten eine Reihe von Metalloxiden, wobei im Fall von Stahlschlacken erhebliche Mengen an Schwermetalloxiden in der Schlacke vorliegen. Zur Reduktion derartiger unerwünschter Metalloxide, und insbesondere von Chromoxiden, Vanadin, Molybden, Wolfram, Kobalt, Mangan, Blei und Zinkoxid, wurde bereits vorgeschlagen flüssige Schmelze auf ein entsprechendes reduzierendes Metallbad, und insbesondere ein Eisenbad, welches freien Kohlenstoff als Reduktionsmittel enthält, aufzubringen, wobei die reduzierten Metalle in den Metallregulus übergehen. Für die wirtschaftliche Durchführung eines derartigen Verfahrens ist es aber zumeist erforderlich die Ausgangsmaterialien unmittelbar als Schmelzen einzusetzen, um die fühlbare Wärme der Schmelze nützen zu können. Des weiteren befindet sich bei allen derartigen Redoxreaktionen die Schlacke mit Metallbad im Gleichgewicht und auf Grund der Gleichgewichtsbedingungen lassen sich Schwermetalloxide nie in einer Weise vollständig reduzieren, bei welcher die in der Schlacke verbleibenden Oxide unter der analytischen Nachweisgrenze wären. Dies gilt insbesondere für Chromoxid, welche in der reduzierten Schlacke in Mengen von zumeist über 1000 ppm verbleiben.

Gläser, und insbesondere Glasschmelzen, können nur dann farblos hergestellt werden, wenn aus derartigen Glasschmelzen auch überaus geringe Spuren von Schwermetalloxiden quantitativ entfernt werden, da die Metalloxide dem Glas entsprechende Farben verleihen. Bei der Aufarbeitung von Glas bzw. Glasschmelzen ist weiters in aller Regel ein Läutern erforderlich, um feinste Gasblasen, wie sie auch bei Reduktionsprozessen zur Elimination von Metalloxiden entstehen, sicher zu entfernen. Dies gelingt nur bei entsprechend hohen Temperaturen und entsprechend niedrig viskosen Schmelzen sowie bei relativ niedrigen Badspiegeln, welche einen Austritt der Gase noch ermöglichen.

Die Erfindung zielt nun darauf ab, ein Verfahren der eingangs genannten Art zu schaffen, mit welchem in besonders einfacher und wirtschaftlicher Weise nicht nur Festsubstanzen sondern auch Schmelzen weitestgehend quantitativ von Schwermetalloxiden befreit werden können, und insbesondere eine Reihe von Schwermetalloxiden bis unter die Nachweisgrenzen eliminiert werden können, wobei gleichzeitig sichergestellt werden soll, dass die aufgegebenen oder im Zuge des Verfahrens gebildeten Schmelze vollständig entgast bzw. geläutert werden.

Zur Lösung dieser Aufgabe besteht das erfindungsgemäße Verfahren im Wesentlichen darin, dass feste Partikel und/oder Schmelzen auf ein zumindest teilweise induktiv erhitztes Bett oder eine Säule mit stückigem Koks aufgegeben werden und die ablaufende reduzierte und/oder entgaste Schmelze gesammelt wird. Da eine Säule oder ein Bett mit stückigen Kohlenstoffträgern zumindest teilweise induktiv erhitzt wird, lassen sich mit Koks wesentlich höhere Temperaturen erzielen als dies bei Verbrennung von Kohlenstoffträgern der Fall wäre. Weiters zeichnet sich eine derartige glühende Säule bzw. ein derartiges glühendes Koksbett durch ein wesentliches höheres Redoxpotential aus, da der Kohlenstoff ja nicht mit Verbrennungsprodukten, und insbesondere CO und CO₂, im entsprechenden thermischen Gleichgewicht steht. Wenn auf eine derartige Säule oder ein derartiges Bett mit hoch erhitzten stückigen Koks feste Partikel aufgegeben werden, wird unmittelbar ein entsprechender Schmelzvorgang eintreten, bei welchem gleichzeitig die gewünschte Reduktion von Metalloxiden erfolgt. Analoges gilt naturgemäß auch für die Aufgabe von bereits geschmolzenem Material, wobei der Umstand, dass die in situ gebildete Schmelze oder die aufgegebene Schmelze durch Umhüllung des stückigen Kokses in relativ dünnen Schichten mit dem glühenden Koks in Kontakt tritt, gleichzeitig Reaktionen ermöglicht, wie sie nur bei Dünnschichtreaktoren beobachtet werden. Dies gilt insbesondere für ein rasches und sicheres Entgasen bzw. Läutern von Schmelzen, wie dies beim Einsatz von Glasschmelzen besonders wünschenswert ist.

Wesentlich für das erfindungsgemäße Verfahren ist somit die Verwendung von hocherhitztem, glühenden, stückigen Koks, dessen Erwärmung zumindest teilweise induktiv erfolgt. Wenn, wie es einer bevorzugten Verfahrensweise entspricht, in ein derartiges induktiv erhitztes Bett oder eine derartige induktiv erhitzte Säule mit Koks Gase eingeblasen werden, kann das Redoxpotential des Bettes in weiten Grenzen geregelt werden. Einblasen von sauerstoffhältigen Gasen führt zu einer teilweisen Verbrennung der glühenden Kohlenstoffträger und damit zur Bildung von CO und CO₂, wodurch das Redoxpotential entsprechend abgestumpft wird und eine Verfahrensführung möglich wird, bei welcher nur edlere Metalle aus ihren Metalloxiden reduziert werden, wohingegen unedlere Metalle in der Schmelze verbleiben. Gleichzeitig kann mit einer derartigen Gaszufuhr neben einer Einstellung des Redoxpotentials auch eine Temperaturveränderung erzielt werden, um auf diese Weise in entsprechenden Bereichen der Säule oder des Bettes volatillisierende Stoffe wiederum zu kondensieren. Die Temperatur des Bettes kann in besonders einfacher Weise durch Veränderung der aufgenommenen elektrischen Leistung bei der induktiven Erhitzung geregelt werden, sodass mit einem einfachen und relativ klein bauenden Reaktor eine vollständige Verfahrenskontrolle möglich wird, mit welcher einer Unzahl von verschiedenen Parametern Rechnung getragen werden kann. Bei entsprechend hohen Temperaturen gelingt es in besonders einfacher Weise Chrom und Vanadin zu reduzieren, wobei auf Grund der glühenden Kohlenstoffträger gegebenenfalls gebildete Carbide in den durch Reduktion ausgebildeten Metallregulus und damit in die Metallschmelze gehen. Insgesamt konnte gezeigt werden, dass bei der Reduktion über einer glühenden Kokssäule, deren Temperatur durch induktive Erhitzung eingestellt wurde, sowohl Chrom als auch Vanadium in Mengen aus den mineralischen Schmelzen reduziert werden könnten, bei welchen sie in der mineralischen Schmelze nur mehr unterhalb der Nachweisgrenze vorliegen. Bei durch Reduktion gebildetem Kohlenmonoxid kann am Kopf der Säule eine Nachverbrennung vorgenommen werden, welche gleichzeitig dazu führt, dass gegebenenfalls gebildetes Zink in dem durch CO-Verbrennung ausgebildeten CO/CO₂-Gleichgewicht zu Zinkoxid oxidiert wird, wodurch unmittelbar ein wirtschaftlich leichter verwertbares Produkt gebildet wird. Wenn Zn-Dampf mit CO bei Temperaturen über dem Kondensationspunkt des Zn abgezogen wird, kann Zn bei einer Vorwärmung des Koks in einem Bunker oberhalb der Aufgabeschurre aus dem Bunker als ablaufende Schmelze abgezogen werden.

Zur Abstumpfung des Redoxpotentials kann, wie es einer bevorzugten Weiterbildung des erfindungsgemäßen Verfahrens entspricht, bevorzugt so vorgegangen werden, dass sauerstoffhaltige Gase eingeblasen werden. Alternativ können naturgemäße Inertgase, CO₂ und/oder H₂O-Dampf und/oder CₓH_{y}-Dampf eingestoßen werden, wenn in erster Linie die Temperatur des Bettes bzw. der Säule beeinflusst werden soll. Glaspartikel oder Glasschmelze können unmittelbar bevorzugt auf den glühenden Koks aufgegeben werden, wodurch im Zuge des erfindungsgemäßen Verfahrens bei entsprechend höheren Temperaturen auf Grund der relativ dünnen Schicht ein rasches Entgasen bzw. Läutern der Glasschmelzen erzielt wird. Insgesamt lassen sich mit einem induktiv erhitzten Bett bzw. einer Säule mit stückigen Kohlenstoffträgern ohne weiteres Temperaturen von 2000° C und darüber erzielen, da eine Kühlwirkung durch thermische Dissoziation der Oxidationsprodukte vermieden wird. Der Einsatz von stückigem Material dient hierbei in erster Linie dazu, die gewünschte Permeabilität für Gas und flüssige Schmelzen sicherzustellen.

Eine weitere besonders vorteilhafte Beeinflussung der Temperatur des Koksbettes bzw. der Kokssäule kann dadurch erfolgen, dass die Frequenz des Induktionsstromes mit zunehmender Menge an geschmolzenem und reduziertem schmelzflüssigen Material im Bereich der Wirksamkeit der Induktionsspulen erniedrigt wird. Auf diese Weise wird dem Umstand Rechnung getragen, dass die Schlackenschmelzen dissoziieren bzw. bei Reduktion zu einem Metallbad eine zunehmend höhere elektrische Leitfähigkeit aufweisen und damit mit abnehmender Frequenz thermisch koppeln. Ausgehend von beispielsweise 50 kHz kann bei dissoziierender Schlacke die Frequenz auf etwa 20 kHz und im Bereich eines Metallbades auf unter 10 kHz abgesenkt werden, um die Verlustleistung bzw. Schmelzwärme aufrecht zu erhalten.

Die erfindungsgemäße Vorrichtung zum Reduzieren von Metalloxiden und/oder Entgasen von Schmelzen ist mit einer Aufgabeöffnung für festes oder schmelzflüssiges Material und einer Abstichöffnung für die behandelte Schmelze ausgestattet. Erfindungsgemäß ist eine derartige Vorrichtung im Wesentlichen gekennzeichnet durch ein rohr- oder rinnenförmiges Gehäuse für die Aufnahme von Koks und eine das Gehäuse umgebende, wenigstens eine Induktionsspule enthaltende Heizeinrichtung. Zur Einstellung des Redoxpotentials bzw. zur bereichsweisen Kühlung ist die Ausbildung bevorzugt so getroffen, dass an das Gehäuse Rohrleitungen für die Zufuhr von Gasen angeschlossen sind. In besonders einfacher Weise kann die Ausbildung so getroffen sein, dass das rohrförmige Gehäuse aus elektrisch isolierendem Material, wie z.B. Al₂O₃ oder von wenigstens einer elektrisch isolierenden Folie gebildet ist und von einer gekühlten Induktionsspule umgriffen ist. Eine derartige elektrisch isolierende Folie kann beispielsweise von hochtemperaturbeständigen Papierfolien gebildet werden, wobei zu Beginn der mechanische Halt durch die in der Regel wassergekühlte Induktionsspule erzielt wird. Bei der Aufgabe von schmelzflüssigem Material oder bei der Ausbildung von Schmelzen wird die elektrisch isolierende Folie rasch mit einem Schlacken- oder Schmelzenpelz überzogen, da ja die Induktionsspule entsprechend gekühlt ist, wodurch die mechanische Stabilität der Säule wesentlich verbessert wird und gleichzeitig Probleme mit Feuerfestmaterial zur Gänze eliminiert werden.

Der stückige Koks kann vor der Aufgabe in das rohrförmige Gehäuse bereits vorerwärmt sein und bei entsprechend hohem Verbrauch auch kontinuierlich nachbeschickt werden. Mit Vorteil ist die Ausbildung hierbei so getroffen, dass an das rohrförmige Gehäuse eine Aufgabeschurrre für stückigen Koks mündet.

Um die Temperatur des Bettes bzw. der Säule Abschnittsweise in einfacher Weise verändern zu können, ist die Ausbildung mit Vorteil so getroffen, dass die Induktionsspule in Achsrichtung des rohrförmigen Gehäuses in mehrere Abschnitte unterteilt ausgebildet ist, wobei bevorzugt für axial aufeinanderfolgende Abschnitte des rohrförmigen Gehäuses gesonderte Temperaturmesseinrichtungen und/oder Messeinrichtungen für die elektrische Leistungsaufnahme vorgesehen sind und dass die Temperatur in gesonderten Abschnitten durch Einstellung der elektrischen Leistung und/oder der einzublasenden Gase und/oder Gasvolumina regelbar ist.

Um beim Einbringen von Schmelzen gebildete heiße Verbrennungsgase und insbesondere die fühlbare Wärme von CO zur Vorwärmung des Koks zu nutzen und ggf. gebildete gasförmige Metalldämpfe zu kondensieren, ist mit Vorteil eine Vorwärmezone ausgebildet. Zu diesem Zweck ist die Ausbildung mit Vorteil so getroffen, dass im Inneren des rohrförmigen Gehäuses ein in das Koksbett bzw. die Kokssäule eintauchendes, von Koks umgebenes Rohr angeordnet ist, welches mit der Aufgabe der festen Partikel oder Schmelzen der Schlacken oder Gläser verbunden ist.

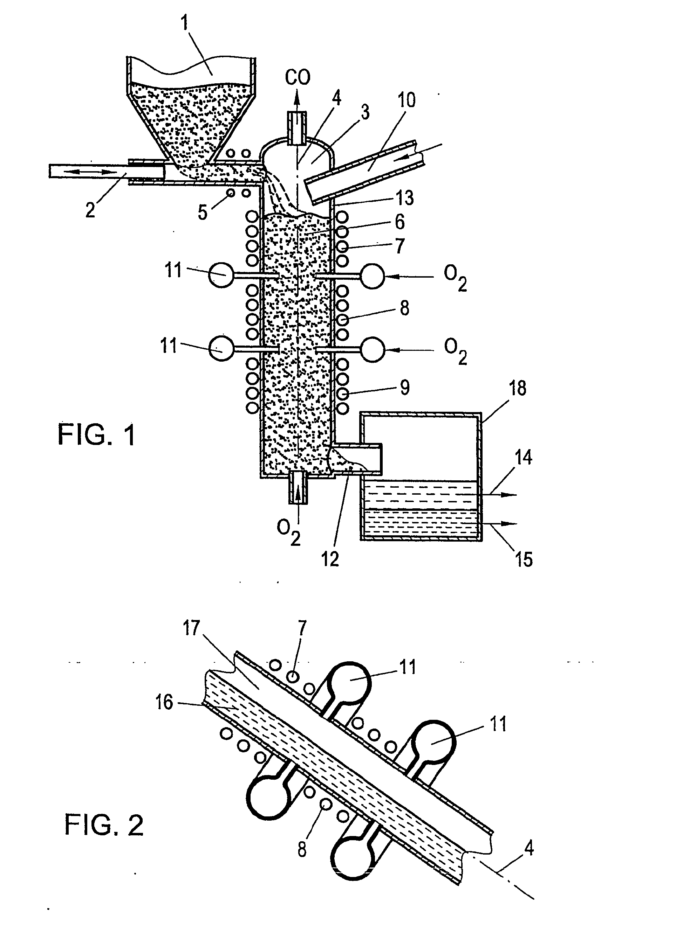

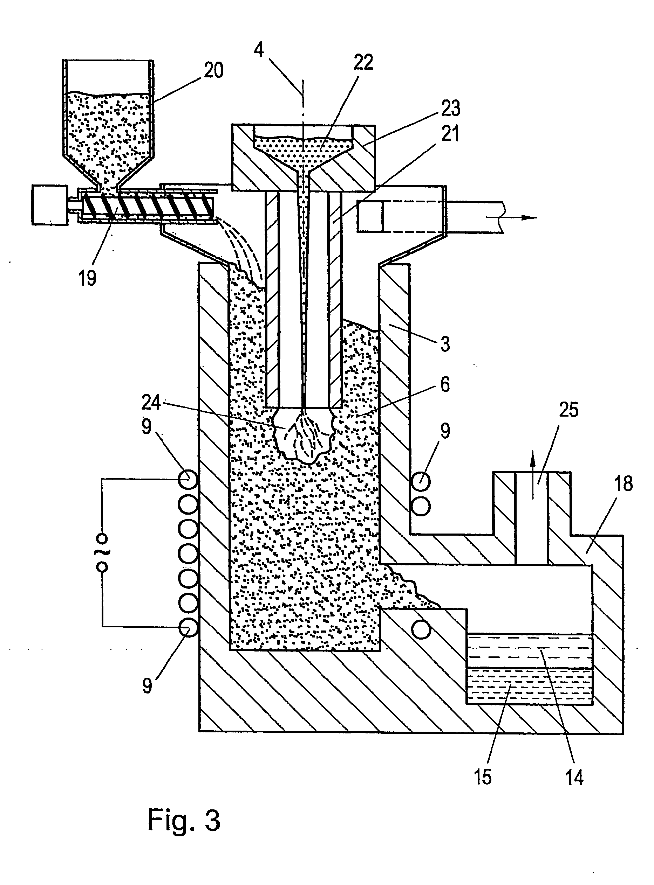

Die Erfindung wird nachfolgend anhand von in der Zeichnung schematisch dargestellten Ausführungsbeispielen der erfindungsgemäßen Vorrichtung näher erläutert. In dieser zeigt Fig.1 eine Ausbildung eines Reaktors mit einer Kokssäule, Fig.2 eine abgewandelte Ausbildung des Reaktors als Rinne mit einem erhitzten Koksbett und Fig.3 einen weiteren modifizierten Reaktor in einem Schnitt entsprechend der Fig.1.

In Fig.1 ist mit 1 ein Aufgabebunker für Koks bezeichnet, aus welchem über einen Dosierstößel 2 Koks in einen Reaktor 3 ausgestoßen wird, dessen Achse mit 4 bezeichnet ist. An der Einstoßstelle bzw. im Bereich der Aufgabeschurre sind Induktionsspulen 5 ersichtlich, über welche der Koks vorgewärmt wird. In diesem Bereich kann Koks aber auch vergasend durch Verbrennen mit Sauerstoff vorgewärmt werden. Die Koksbettschüttung 6 wird über Induktionsspulen 7,8 bzw. 9 erwärmt, wobei die Vorschlacke bzw. Schlackenschmelze über den Aufgabekanal 10 aufgegeben wird. Über diesen Kanal 10 kann naturgemäß entsprechend stückiges Material bei entsprechend hoher Erhitzung des Koksbettes aufgegeben werden, welches in der Folge im Koksbett bzw. innerhalb der Schüttung geschmolzen wird. Bei Aufgabe von Vorschlackenschmelzen, wie sie beispielsweise aus beliebigen Prozessen anfallen können, bei welchen schmelzflüssige Schlacken anfallen, entspricht die Temperatur der Kokssäule im Wesentlichen der Temperatur der Schlackenschmelze. Über Ringkanäle 11 können Gase, und insbesondere Sauerstoff, eingestoßen werden, wodurch zum einen das Redoxpotential verändert werden kann und zum anderen die Temperatur beeinflusst werden kann. Über die axiale Länge, d.h. in Längsrichtung der Achse 4 des Reaktors, kann somit sowohl eine Redoxgradient als auch ein Temperaturgradient eingestellt werden, sodass sichergestellt werden kann, dass im Bereich des Schlackenabstiches 12 ein Eisenoxid- und Schwermetalloxidfreier Schlacken- und Metallabstich gelingt, sodass auch an dieser Stelle Feuerfestprobleme nicht mehr auftreten. Die Wand 13 des Gehäuses des Reaktors 3 kann von einfachen Feuerfestfolien gebildet sein, welchem im Zuge des Aufschmelzens bzw. Herabfließens der Schmelze mit Schmelze benetzt werden und einen entsprechenden Schlacken- bzw. Schmelzenpelz ausbilden. Die Spulen 7,8 und 9 sind als wassergekühlte Kupferleiter ausgebildet und stellen eine entsprechende Kühlung der Wand und damit die Ausbildung des Schlacken- bzw. Schmelzepelzbelages sicher. Das über die Abstichöffnung 12 abgezogene Material gelangt in einen Vorherd 18, in welchem die Schlacke vom Metall durch Sedimentation getrennt werden kann, wobei der Schlackenabstich mit 14 und der Metallabstich mit 15 bezeichnet ist.

Prinzipiell kann die Achse 4 des Reaktors vertikal gerichtet sein, sodass eine Reaktorsäule bzw. eine glühende Kokssäule ausgebildet wird. Wie bei der Darstellung in Fig.2 ersichtlich, kann aber der Koksreaktor auch mit schräger Achse ausgebildet sein, wobei hier über der Koksschüttung 16 ein entsprechender Gasraum 17 verbleibt. Auch bei dieser Ausbildung kann über die Ringkanäle 11 in verschiedenen Querschnittsebenen wiederum Gas eingestoßen werden, sodass gemeinsam mit der entsprechenden Leistungsregelung der Spulen 7,8 bzw. 9 ein Redox- und ein Temperaturgradient über die axiale Länge des Reaktors eingestellt werden kann. Bei schräggestelltem Reaktor verbleibt, wie bereits erwähnt, ein entsprechender Gasraum 17, wobei eine derartige Ausbildung besonders dann vorteilhaft angewandt wird, wenn große Mengen atmosphiler Schwermetalle, d.h. in reduziertem Zustand verdampfende Metalle, vorliegen.

In Fig.3 ist wiederum ein vertikal angeordneter Reaktor 3 mit der Achse 4 dargestellt. Der Koks wird über eine Schnecke 19 aus dem Bunker 20 abgezogen und in den Reaktor 3 eingestoßen. In das Koksbett 6 taucht ein Rohr 21 ein, über welches eine Schmelze 22 aus dem Tundish 23 aufgegeben wird. Aus der Kavität 24 verdampfendes Material kondensiert im Oberbereich der Kokssäule, welche das Rohr 21 umgibt oder dient, soferne es gasförmig wie z.B. CO verbleibt, der Vorwärmung des Kokses. Die Induktionsspulen sind wiederum mit 9 bezeichnet und es ist ein Vorherd 18 angeschlossen, aus welchem Metallregulus und Schlacke gesondert abgestochen werden kann. Über den Kamin 25 kann Metalldampf abgezogen werden.

Den Reaktoren gemeinsam ist eine gute Vortrennung der Metallschmelze und eine gute Benetzung der Kokspartikel durch die Metallschmelze. Die reduzierte Schlackenschmelze bleibt bevorzugt auf der Koksbettoberfläche, wobei eine besonders gute Trennung der Schlackenphase von der Metallschmelze auch auf Grund der weitestgehend voneinander verschiedenen Viskositäten und verschiedenen Dichtheiten gelingt. Schlackenschmelzen haben in der Regel hohe Viskositäten und haften daher besser am Koksbett als die niedrigviskosen und damit wesentlich besser fließfähigen Metallschmelzen.

Eine Nachverbrennung am Aufgabeende, bei welcher CO zu CO₂ verbrannt wird, ist prinzipiell möglich und führt zu einer Effizienzsteigerung durch fossilen Wärmeeintrag. Die Koksbettoberfläche ist hierbei durch die Schlackenschmelze abgedeckt, sodass die Buoduarreaktion weitestgehend unterdrückt wird. Insgesamt kann mit dem glühenden Koksbett ein wesentlich höheres Ausmaß an direkter Reduktion, bei welcher Metalloxide mit Kohlenstoff zu flüssigen Metallen und Kohlenmonoxid reagieren, erzielt werden. Bei dieser direkten Reduktion entsteht gegenüber der indirekten Reduktion kein CO₂, welches auf Grund des entsprechenden CO₂/CO-Partialdrucks eine unerwünschte Rückverschlackung bzw. Rückoxidation, insbesondere bei V und Cr, zur Folge haben könnte.

Die im Koksbett ausgebildete Metallschmelze wird darüber hinaus durch das Koksbett aufgekohlt bzw. bildet im Metallbad lösliche Carbide, wie z.B. Carbide der Metalle Eisen, Vanadin, Chrom oder Wolfram, aus. Prinzipiell gelingt es Chrom auch mit relativ kurzen Kokssäulen auf unter 60 ppm aus Schlacken heraus zu reduzieren.

Generell können Flüssigschlacken unterschiedlicher Provenienz eingesetzt werden und es können vor allen Dingen Eisenoxid, Phosphoroxid, Zinkoxid, Bleioxid, Manganoxid, Kupferoxid, Vanadinoxid und Chromoxide in einfacher Weise reduziert werden. Die Schlackenreduktion selbst ist endotherm, sodass eine entsprechende Wärmezufuhr bzw. Zufuhr elektrischer Energie zum Koksbettreaktor erforderlich ist. Bedingt durch die gute elektrische Leitfähigkeit von Koks wird ein hohes Maß an Energieeffizienz erreicht. Zu beachten ist, dass das Reduktionspotential von glühender Koks mit zunehmender Temperatur ansteigt, wohingegen die Sauerstoffaffinität von Metallen mit zunehmender Temperatur abnimmt, wodurch sich die herausragende Reduktionsleistung ergibt.

## Patentansprüche

1. Verfahren zum Reduzieren von metalloxidischen Schlacken bzw. Gläsern und/oder Entgasen von mineralischen Schmelzen, **dadurch gekennzeichnet, dass** feste Partikel und/oder Schmelzen auf ein zumindest teilweise induktiv erhitztes Bett oder eine Säule mit stückigem Koks aufgegeben werden und die ablaufende reduzierte und/oder entgaste Schmelze gesammelt wird.

2. Verfahren nach Anspruch 1, **dadurch gekennzeichnet, dass** das Redoxpotential des Bettes bzw, der Säule durch Einblasen von Gasen geregelt wird und dass die Temperatur des Bettes bzw. der Säulen durch Veränderung der aufgenommenen elektrischen Leistung und durch Einblasen von Gasen geregelt wird.

3. Verfahren nach Anspruch 2, **dadurch gekennzeichnet, dass** als Gase sauerstoffhaltige Gase eingeblasen werden.

4. Verfahren nach einem der Ansprüche 1 bis 3, **dadurch gekennzeichnet, dass** Glaspartikel oder Glasschmelzen auf glühenden Koks aufgegeben werden.

5. Verfahren nach einem der Ansprüche 1 bis 4, **dadurch gekennzeichnet, dass** die Frequenz des Induktionsstromes mit zunehmender Menge an geschmolzenem und reduziertem schmelzflüssigen Material im Bereich der Wirksamkeit der Induktionsspulen erniedrigt wird.

6. Vorrichtung zum Reduzieren von metalloxidischen Schlacken bzw. Gläsern und/oder Entgasen von mineralischen Schmelzen mit einer Aufgabeöffnung (1) für festes oder schmelzflüssiges Material und einer Abstichöffnung (12) für die behandelte Schmelze, **gekennzeichnet durch** ein rohr- oder rinnenförmiges Gehäuse (3) enthaltend ein Bett oder eine Säule mit stückigem Koks (6), und eine das Gehäuse (3) umgebende, wenigstens eine Induktionsspule (7, 8, 9) enthaltende Heizeinrichtung.

7. Vorrichtung nach Anspruch 6, **dadurch gekennzeichnet, dass** an das Gehäuse (3) Rohrleitungen (11) für die Zufuhr von Gasen angeschlossen sind.

8. Vorrichtung nach Anspruch 6 oder 7, **dadurch gekennzeichnet, dass** das rohrförmige Gehäuse (3) aus elektrisch isolierendem Material, wie z.B. Al₂O₃ oder von wenigstens einer elektrisch isolierenden Folie gebildet ist und von einer gekühlten Induktionsspule (7, 8, 9) umgriffen ist.

9. Vorrichtung nach einem der Ansprüche 6 bis 8, **dadurch gekennzeichnet, dass** an das rohrförmige Gehäuse (3) eine Aufgabeschurrre für stückigen Koks mündet.

10. Vorrichtung nach einem der Ansprüche 6 bis 9, **dadurch gekennzeichnet, dass** die Induktionsspule (7, 8, 9) in Achsrichtung des rohrförmigen Gehäuses (3) in mehrere Abschnitte unterteilt ausgebildet ist.

11. Vorrichtung nach einem der Ansprüche 6 bis 10, **dadurch gekennzeichnet, dass** für axial aufeinanderfolgende Abschnitte des rohrförmigen Gehäuses (3) gesonderte Temperaturmesseinrichtungen und/oder Messeinrichtungen für die elektrische Leistungsaufnahme vorgesehen sind und dass die Temperatur in gesonderten Abschnitten durch Einstellung der elektrischen Leistung und/oder der einzublasenden Gase und/oder Gasvolumina regelbar ist.

12. Vorrichtung nach einem der Ansprüche 6 bis 11, **dadurch gekennzeichnet, dass** im Inneren des rohrförmigen Gehäuses (3) ein in das Koksbett bzw. die Kokssäule eintauchendes, von Koks umgebenes Rohr angeordnet ist, welches mit der Aufgabe der festen Partikel oder Schmelzen der Schlacken oder Gläser verbunden ist.

## Claims

1. A method for reducing metal-oxidic slags or glasses and/or degassing mineral melts, **characterized in that** solid particles and/or melts are charged onto an at least partially inductively heated bed or column containing lumpy coke, and the reduced and/or degassed melt running off is collected.

2. A method according to claim 1, **characterized in that** redox potential of the bed or column is controlled by blowing in gases and the temperature of the bed or column is controlled by changing the electric power input and by blowing in gases.

3. A method according to claim 2, **characterized in that** oxygen-containing gases are blown in as said gases.

4. A method according to any one of claims 1 to 3, **characterized in that** glass particles or glass melts are charged onto glowing coke.

5. A method according to any one of claims 1 to 4, **characterized in that** the frequency of the induction current is lowered with the amount of melted and reduced molten material increasing in the region of efficiency of the induction coils.

6. A device for reducing metal-oxidic slags or glasses and/or degassing mineral melts, including a charging opening (1) for solid or molten material and a tap opening (12) for the treated melt, **characterized by** a tubular or channel-shaped housing (3) containing a bed or a column with lumpy coke (6), and a heating means surrounding said housing (3) and including at least one induction coil (7, 8, 9).

7. A device according to claim 6, **characterized in that** ducts (11) for the feeding of gases are connected to the housing (3).

8. A device according to claim 6 or 7, **characterized in that** the tubular housing (3) is comprised of an electrically insulating material such as, e.g., Al203, or at least an electrically insulating foil, and encompassed by a cooled induction coil (7, 8, 9).

9. A device according to any one of claims 6 to 8, **characterized in that** a charging chute for lumpy coke opens into the tubular housing (3).

10. A device according to any one of claims 6 to 9, **characterized in that** the induction coil (7, 8, 9) is designed to be subdivided into several sections in the axial direction of the tubular housing (3).

11. A device according to any one of claims 6 to 10, **characterized in that** separate temperature-measuring means and/or electric power input measuring means are provided for axially consecutive sections of the tubular housing (3), and that the temperature is controllable in distinct sections by adjusting the electric power and/or the gases and/or gas volumes to be blown in.

12. A device according to any one of claims 6 to 11, **characterized in that** a tube immersed in the coke bed or coke column and surrounded by coke is arranged in the interior of the tubular housing (3) which is connected with the feed of solid particles or slag melts or glasses.

## Revendications

1. Procédé pour réduire des laitiers ou verres, contenant des oxydes métalliques et/ou pour dégazer des matières minérales en fusion, **caractérisé en ce qu'**on ajoute des particules solides et/ou des matières en fusion sur un lit ou une colonne avec du coke en morceaux au moins chauffé en partie par induction et on recueille le produit en fusion réduit et/ou dégazé s'écoulant.

2. Procédé selon la revendication 1, **caractérisé en ce que** le potentiel redox du lit ou de la colonne est régulé par insufflation de gaz et **en ce que** la température du lit ou de la colonne est régulée par variation de la puissance électrique absorbée et par insufflation de gaz.

3. Procédé selon la revendication 2, **caractérisé en ce qu'**on insuffle comme gaz des gaz contenant de l'oxygène.

4. Procédé selon l'une quelconque des revendications 1 à 3, **caractérisé en ce qu'**on ajoute des particules de verre ou du verre en fusion sur du coke incandescent.

5. Procédé selon l'une quelconque des revendications 1 à 4, **caractérisé en ce qu'**on abaisse la fréquence du courant d'induction au fur et à mesure qu'augmente la quantité de matières fondues et de matières en fusion liquide réduites dans le domaine d'activité des bobines d'induction.

6. Dispositif pour réduire des laitiers ou verres contenant des oxydes métalliques et/ou dégazer des matières minérales en fusion, présentant une ouverture de chargement (1) pour un matériau solide ou en fusion liquide et une ouverture de coulée (12) pour la matière en fusion traitée, **caractérisé par** un corps (3) de forme tubulaire ou en rigole contenant un lit ou une colonne avec du coke en morceaux (6), et un dispositif de chauffage entourant le corps (3) et contenant au moins une bobine d'induction (7, 8, 9).

7. Dispositif selon la revendication 6, **caractérisé en ce que** des tuyauteries (11) sont raccordées au corps (3) pour l'amenée de gaz.

8. Dispositif selon la revendication 6 ou 7, **caractérisé en ce que** le corps (3) de forme tubulaire est formé en un matériau électriquement isolant, tel que par exemple Al₂O₃ ou au moins une feuille électriquement isolante et est entouré par une bobine d'induction (7, 8, 9) refroidie.

9. Dispositif selon l'une quelconque des revendications 6 à 8, **caractérisé en ce que** sur le corps (3) de forme tubulaire débouche une goulotte de chargement pour coke en morceaux.

10. Dispositif selon l'une quelconque des revendications 6 à 9, **caractérisé en ce que** la bobine d'induction (7, 8, 9) est réalisée divisée en plusieurs tronçons dans la direction de l'axe du corps (3) de forme tubulaire.

11. Dispositif selon l'une quelconque des revendications 6 à 10, **caractérisé en ce qu'**il est prévu, pour des tronçons se succédant axialement du corps (3) de forme tubulaire, des dispositifs de mesure de température séparés et/ou des dispositifs de mesure pour la puissance électrique absorbée, et **en ce que** la température peut être réglée dans des tronçons séparés, par réglage de la puissance électrique et/ou des gaz à insuffler et/ou des volumes de gaz.

12. Dispositif selon l'une quelconque des revendications 6 à 11, **caractérisé en ce qu'**à l'intérieur du corps (3) de forme tubulaire est disposé un tube plongeant dans le lit de coke ou la colonne de coke et entouré par du coke, lequel est relié au chargement des particules solides ou des matières en fusion des laitiers ou verres.
